# FASCICULE DE BREVET EUROPEEN

(11) **EP 1 559 653 B1**
(45) Date de publication et mention de la délivrance du brevet: **23.05.2007**
(21) Numéro de dépôt: 05290147.7
(22) Date de dépôt: 24.01.2005
(51) Int. Cl.: B65D 5/42, G06K 19/07, G06K 19/077

(54) **Emballage à intégrité contrôlable**
Verpackung mit Originalitätssicherung
Tamper-evident package

(30) Priorité: 30.01.2004 FR 0400900
(43) Date de publication de la demande: 03.08.2005
(73) Titulaire: NEOPOST TECHNOLOGIES, 92220 Bagneux (FR)
(72) Inventeur: Coste, François, 94430 Chennevières sur Marne (FR)
(74) Mandataire: Joly, Jean-Jacques

(56) Documents cités:
- EP-A- 1 162 480
- EP-A- 1 291 818
- US-A- 5 497 140
- US-B1- 6 259 369

## Description

### Domaine de l'invention

La présente invention concerne les éléments d'emballage, tels que des enveloppes, boîtes ou colis, dont l'intégrité peut être contrôlée électroniquement.

### Art antérieur

La technologie de radio-identification (RFID) est aujourd'hui très répandue dans de nombreux domaines. Cette technologie est le plus souvent mise en oeuvre dans des étiquettes dites « radio tags » qui comprennent une puce électronique qui contient des informations numériques consultables à distance par radiofréquence au moyen d'un dispositif de lecture.

Bien que leur fonction principale consiste à stocker des informations qui sont facilement accessibles à distance, ces étiquettes sont parfois utilisées comme témoin d'intégrité pour contrôler une ouverture non autorisée d'un élément d'emballage tel qu'une enveloppe ou un colis. Dans ce cas, l'étiquette est munie d'un lien qui, une fois coupé, empêche toute possibilité de lecture des informations contenues dans la puce de l'étiquette. L'étiquette munie d'un lien fait alors office de scellé et se place au niveau des parties de l'objet que l'on manipule lors de son ouverture. Dans le cas d'une enveloppe par exemple, le lien de l'étiquette est attaché entre le rabat d'ouverture et le reste du corps de l'enveloppe de sorte que celle-ci ne peut être ouverte normalement sans couper le lien.

Cependant, ce type d'étiquette ne permet de contrôler une ouverture non autorisée que pour les cas où l'élément d'emballage a été ouvert de façon classique, à savoir par manipulation des moyens prévus pour son ouverture. Par exemple, il est tout à fait possible d'accéder au contenu d'une enveloppe ou d'un colis sans toucher aux moyens d'ouverture prévus à cet effet en découpant un bord de l'enveloppe ou la surface du colis. Dans ce cas, le lien n'est pas rompu et le contrôle électronique à distance de l'intégrité de l'emballage est inefficace. Seule une inspection visuelle minutieuse pourrait permettre de déterminer que l'emballage à été violé. Dans un contexte industriel comme celui d'une société d'acheminement par exemple, une telle solution paraît peu réaliste au vu des quantités d'enveloppes ou de colis à traiter chaque jour.

Le document US-A-6 259 369, qui est considéré comme l'état de la technique le plus proche, décrit un emballage à intégrité contrôlable comportant une encre conductrice placée sur la partie inférieure d'un emballage.

### Objet et description succincte de l'invention

La présente invention vise à remédier aux inconvénients précités et à réaliser un emballage qui permet de contrôler électroniquement son intégrité et ce, quelle que soit la partie de l'emballage qui a été ouverte.

Ces buts sont atteints grâce à un emballage à intégrité contrôlable selon la revendication 1.

Ainsi, l'emballage selon l'invention comprend des moyens de mémorisation interrogeables à distance qui sont utiles pour l'identification et le suivi d'un l'objet transporté dans l'emballage tout en jouant le rôle de témoin de l'intégrité de l'emballage. En effet, le circuit d'antenne étant disposé sur l'ensemble du pourtour de la feuille de matériau, toute ouverture de l'emballage à partir de n'importe quel bord de ce dernier sera détectée puisqu'elle entraînera la rupture du circuit d'antenne. Le contrôle de l'intégrité de l'emballage s'effectue par interrogation à distance de celui-ci : s'il n'est pas possible de lire les informations mémorisées dans le composant, c'est que l'antenne a été rompue suite à une ouverture frauduleuse.

Le circuit d'antenne peut s'étendre en outre sur les faces internes principales de la feuille de matériau. Le niveau de détection d'ouverture est ainsi accru car même une ouverture de l'emballage par une incision sur une des faces de ce dernier peut être détectée.

Afin de couvrir plus de zones de détection sur l'emballage, le circuit d'antenne disposé sur la feuille de matériau peut décrire une série d'ondulations ou de zigzags.

Selon une caractéristique de l'invention, le moyen de mémorisation de données et le circuit d'antenne du composant électronique sont disposés sur la surface interne de la feuille de matériau de manière à être protégé à l'intérieur de l'emballage une fois ce dernier assemblé.

Selon une autre caractéristique de l'invention, une première partie du circuit d'antenne est disposée sur une face interne de la feuille de matériau, la seconde partie complémentaire du circuit d'antenne étant disposée sur l'autre face interne de la feuille à un emplacement déterminé de manière à compléter la première partie du circuit une fois l'emballage assemblé.

Le circuit d'antenne peut être constitué d'un fil conducteur de très faible épaisseur qui est collé sur la surface interne de la feuille de matériau ou d'une encre conductrice déposée sur la surface interne de la feuille de matériau. L'utilisation d'une encre conductrice permet de former facilement des motifs variés dans le circuit d'antenne tels que des ondulations ou des zigzags par exemple.

L'invention s'applique à divers type d'emballages comme notamment des enveloppes ou des boîtes pliantes utilisées comme colis. Lorsque ces derniers comportent des portions de fragilisation, une partie du circuit d'antenne peut traverser ces portions de manière à faciliter sa rupture en cas d'ouverture frauduleuse.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue d'une enveloppe sous forme dépliée montrant un premier mode de réalisation de l'emballage de la présente invention,
- la figure 2 est une vue de l'enveloppe de la figure 2 une fois assemblée,
- la figure 3 est une vue d'une boîte sous forme dépliée correspondant à un deuxième mode de réalisation de l'emballage de l'invention,
- la figure 4 est une vue de la boîte de la figure 3 une fois assemblée, et
- la figure 5 est une variante de réalisation de l'enveloppe de la figure 1.

### Description détaillée des modes de réalisation de l'invention

Afin de ne pas compliquer inutilement la description, la présente invention sera essentiellement décrite en relation avec des enveloppes et des boîtes de colis qui sont des éléments d'emballage couramment utilisés pour transporter des documents ou des objets. Cependant, il apparaîtra clairement que la présente invention s'applique à tout autre type d'emballages qui, une fois assemblés, forment une enceinte hermétique autour de l'objet conditionné.

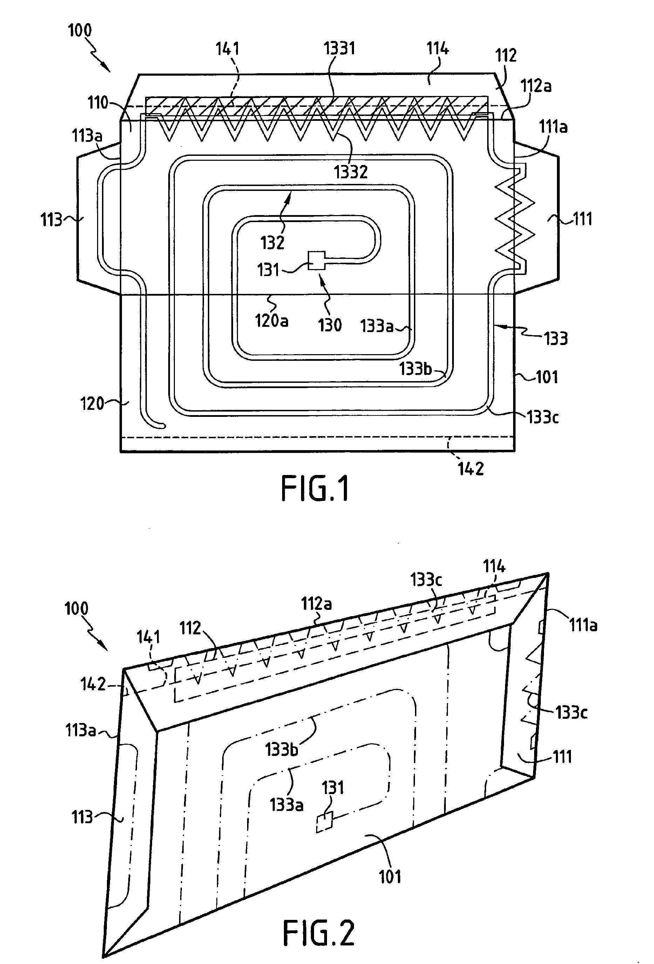

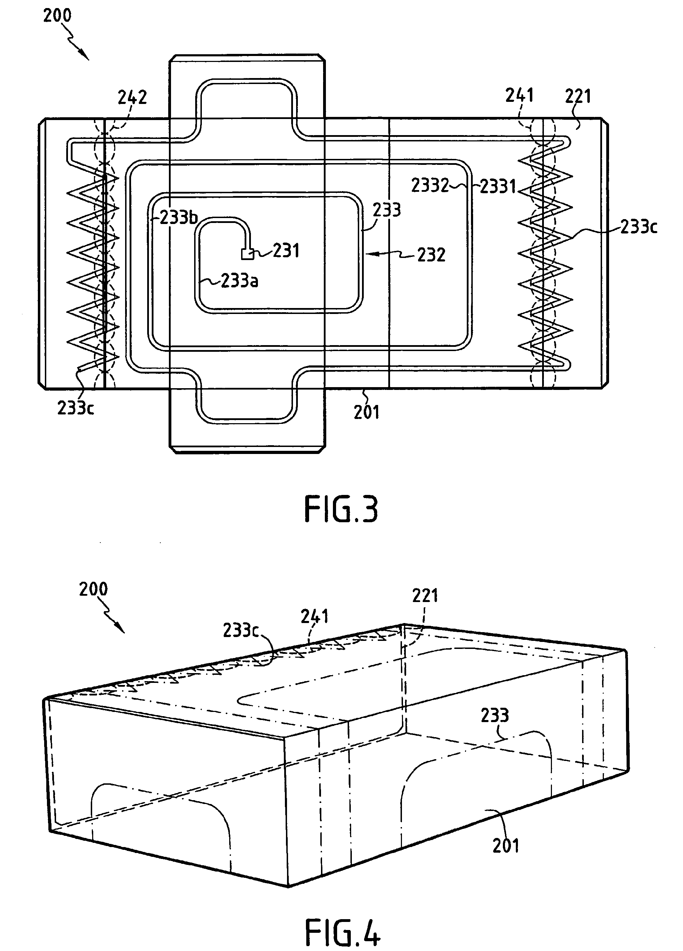

Les figures 1 et 2 illustrent un exemple de réalisation de l'emballage objet de la présente invention appliqué à une enveloppe de courrier traditionnelle. La figure 1 montre une enveloppe 100 dans sa forme dépliée. L'enveloppe 100 est formée à partir d'une feuille 101 de papier ou autre qui est découpée suivant un schéma qui définit les différents éléments à plier et à assembler afin de former le corps de l'enveloppe dans lequel l'objet (ex. documents) à transporter pourra être logé.

Dans l'exemple considéré, la feuille 101 comprend une première portion 110 comprenant trois volets 111, 112 et 113 et une seconde portion 120. De façon bien connue, l'enveloppe est assemblée par le pliage des portions 110 et 120 suivant la ligne de pliage 120a, les volets 111 et 113 fermant les bords latéraux de l'enveloppe par pliage suivant les lignes 111a et 113a et collage contre la portion 120. La feuille 101 ainsi pliée et collée forme l'enveloppe 100 dans laquelle des objets, tels que des documents, peuvent être introduits par l'ouverture laissée libre par la portion 112. Une fois remplie, l'enveloppe est définitivement fermée de façon bien connue au moyen de la portion 112 dont la face en regard de la portion 120 est munie d'une bande autocollante 114.

Dans la présente invention, on cherche à réaliser un emballage dont l'intégrité peut être contrôlée à distance de façon sûre et rapide. On utilise pour cela un composant électronique 130 de type transpondeur comme témoin de cette intégrité. En effet, puisque le composant électronique est interrogeable à distance comme décrit plus loin en détail, si celui-ci est endommagé physiquement au point de ne plus être interrogeable, il est possible de déterminer que l'emballage a été ouvert sans autorisation. En d'autres termes, l'intégrité de l'emballage selon l'invention est assurée par l'intégrité mécanique et, par conséquent, électronique du composant.

Plus précisément, tel que représenté en figure 1, le composant électronique 130 est formé d'une puce électronique 131 reliée à une antenne 132 tous deux disposés sur une surface interne de la feuille 101. L'antenne 132 permet la lecture à distance des informations contenues dans la puce. L'antenne 132 est formée par un circuit ou bobinage 133 qui comprend deux conducteurs 1331 et 1332 se rejoignant à l'extrémité du circuit d'antenne 133. Les conducteurs 1331 et 1332 sont également reliés à la puce 131. Les conducteurs 1331 et 1332 forment par conséquent un circuit fermé (boucle) correspondant au circuit d'antenne 133. Ainsi, toute coupure d'un ou des deux conducteurs 1331, 1332 à un endroit quelconque du circuit d'antenne 133 aboutit à ouvrir ce circuit et rend impossible toute transmission avec la puce électronique. Selon l'invention, le contrôle de l'intégrité de l'emballage (i.e. détection d'ouverture) s'effectue en fonction de l'état du circuit d'antenne qui est soit fermé et opérationnel indiquant que l'emballage est intact, soit interrompu à un ou plusieurs endroits témoignant alors d'une ouverture de l'emballage. En outre, la présence de la puce électronique 131 et du circuit d'antenne 132 sur la seule surface interne de l'enveloppe assure une parfaite confidentialité à ce contrôle d'intégrité.

La puce 131 comprend principalement un circuit électronique de mémorisation de données qui peut être accédé en lecture ainsi qu'en écriture le cas échéant. La lecture, et éventuellement l'écriture, de données dans le circuit de mémoire s'effectue par transmission radiofréquence grâce à l'antenne 132 notamment. Si l'on interrompt le circuit qui constitue l'antenne 132, celle-ci devient inopérante et aucune transmission avec la puce 131 ne peut plus être réalisée, témoignant ainsi d'une ouverture frauduleuse de l'enveloppe.

Afin de détecter une ouverture non autorisée de l'enveloppe et cela, quel que soit le bord de l'enveloppe découpé ou déchiré, on dispose le circuit d'antenne 133 au moins sur l'ensemble du pourtour de l'enveloppe (spire 133c sur la figure 1) de manière à couvrir tous les bords de l'enveloppe. De cette façon, l'antenne 132 passe au moins une fois sur les lignes de pliage 111a, 112a, 113a et 120a qui forment les bords de l'enveloppe 100 après assemblage. Ainsi, une fois l'enveloppe assemblée et fermée comme illustrée sur la figure 2, l'antenne 132 est présente sur tous les bords de l'enveloppe et toute tentative d'ouverture par un de ces bords pourra être détectée contrairement au dispositif de l'art antérieur qui ne permette de détecter qu'une ouverture par le rabat 112.

Le circuit d'antenne 133 peut également s'étendre sur les parties intérieures des portions 110 et 120 (spires 133a et 133b) pour permettre la détection d'une ouverture de l'enveloppe par les faces principales à l'avant ou à l'arrière.

D'autre part, afin d'accroître encore le niveau de sûreté, l'antenne 132 peut présenter des portions en forme de zigzags ou d'ondulations comme représentées sur les volets 111 et 112 de la figure 1. On forme ainsi plus de zones de détection sur l'enveloppe de sorte que même une petite incision de l'enveloppe peut être détectée. Plus généralement, l'angle d'ondulation ou de zigzag est choisi de manière à empêcher toute extraction d'un document ou d'un objet de l'emballage. Par conséquent, l'espacement entre deux ondulations ou zigzags est déterminé en fonction de la taille de l'objet enfermé dans l'emballage.

Toujours dans un souci d'augmenter le niveau de détection d'une ouverture de l'enveloppe, celle-ci peut être munie de portions de fragilisation qui correspondent à des découpages discontinus ou à des micro-perforations au niveau des zones de collage des volets afin d'entraîner le déchirement d'une partie du volet et/ou de la portion de l'enveloppe correspondante. Dans l'exemple de la figure 1, des portions de fragilisation 141 et 142 sont respectivement présentes sur le volet 112 au niveau du passage du circuit d'antenne 133 et sur la portion 120 au niveau de la zone de collage du volet 112. Ainsi, toute tentative d'ouverture du volet 112 conduira à arracher une ou plusieurs parties de celui-ci et/ou de la portion 120. Les parties arrachées sur le volet 112 conduisent à des points de rupture définitifs dans le circuit d'antenne. Des portions de fragilisations peuvent bien entendu être présentes sur les autres volets et portions de l'enveloppe correspondantes.

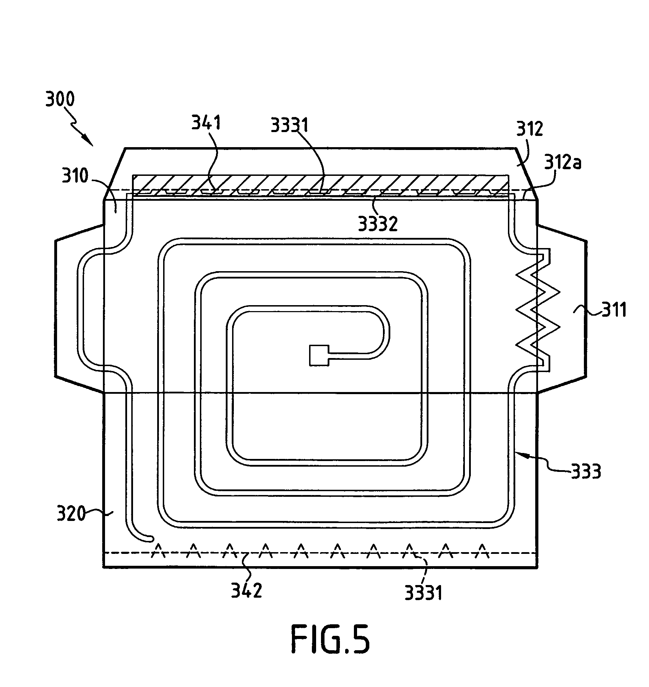

La figure 5 montre une variante de réalisation d'une enveloppe à intégrité contrôlable conformément à l'invention. L'enveloppe illustrée en figure 5 diffère de celle de la figure 1 en ce que des portions complémentaires du circuit d'antenne 333 sont disposées à la fois sur les volets et sur les portions principales de l'enveloppe. Dans l'exemple de la figure 5, une partie du circuit d'antenne 333 est disposée sur le volet 312 alors qu'une autre partie complémentaire, correspondant aux parties manquantes du conducteur 3331 sur le volet 312, est disposée sur la portion 320 du côté opposé de la feuille de matériau. Ainsi, ce n'est qu'une fois l'enveloppe fermée par rabat et collage du volet 312 sur la portion 320 (préalablement repliée sur la portion 310 comme sur la figure 2) que les conducteurs 3331 et 3332 forment un chemin continu sur la surface interne de la feuille de matériau qui ferme le circuit d'antenne 333. Lorsque l'enveloppe est fermée, on se retrouve dans la configuration illustrée à la figure 2. Cela permet de détecter éventuellement une ouverture de l'enveloppe par décollement du volet 312. En effet, même si le volet 312 est décollé délicatement, il faudra ensuite le recoller parfaitement, à savoir d'une manière fiable et correctement ajustée sans quoi le circuit d'antenne restera ouvert et donc inopérant.

De plus, comme pour le mode de réalisation de la figure 1, des portions de fragilisation (prédécoupage) 341 et/ou 342 peuvent être présentes notamment sur le passage du circuit 333 rendant impossible une ouverture de l'enveloppe sans arrachements des portions de fragilisations qui conduisent à des points de rupture définitifs dans le circuit d'antenne.

L'usage de portions de fragilisation est ici décrit en relation avec des enveloppes mais celles-ci peuvent être mises en oeuvre dans tout autre type d'emballage.

Par conséquent, conformément à l'invention, il est possible de réaliser des enveloppes dont l'intégrité peut être contrôlée à distance avec un grand niveau de sûreté. De plus, comme le composant électronique 130 et plus particulièrement l'antenne 132 sont disposés uniquement à l'intérieur de l'enveloppe, il est très difficile de déterminer les points de passage de l'antenne lorsqu'on observe l'enveloppe de l'extérieur. Le composant 130 est en outre protégé à l'intérieur de l'enveloppe, ce qui permet d'éviter à ce dernier d'être endommagé par des manipulations de l'enveloppe durant le tri ou le transport.

Les figures 3 et 4 illustrent un deuxième mode de réalisation de l'emballage selon l'invention qui est cette fois-ci appliqué à une boîte pliante 200 telle que celles couramment utilisées pour les colis postaux. Le principe mis en oeuvre est le même que décrit précédemment en relation avec l'enveloppe 100 illustrée aux figures 1 et 2.

Tel que représenté sur la figure 3, un composant électronique 230, formé d'une puce électronique 231 relié à une antenne 232, est disposé sur la surface interne d'une feuille 201 en carton ou autre. L'antenne 232 s'étend au moins au voisinage de l'ensemble du pourtour de l'enveloppe (spire 233c sur la figure 1) de manière à couvrir tous les bords de la boîte 200. De cette façon, le circuit 233 de l'antenne 232 passe au moins une fois sur les lignes de pliage qui forme le bord de la boîte 200 après assemblage (figure 4).

De même que pour l'enveloppe décrite précédemment, le circuit d'antenne 233 peut également s'étendre sur les faces principales à l'intérieure de la boîte 200 (spires 233a et 233b) de manière à couvrir aussi les faces de cette dernière (i.e. couvercle, fond et faces de côtés). Par conséquent, une ouverture pratiquée sur une des surfaces de la boîte pourra être également détectée. L'antenne peut être disposée suivant un enroulement classique ou suivant une forme ondulée ou en zigzag afin de multiplier encore les zones de détection dans la boîte.

De même que pour les enveloppes décrites ci-dessus, les emballages type boîte pliante peuvent comporter des portions de fragilisation servant de témoins d'ouverture. Ces portions fragilisées par un prédécoupage sont irrémédiablement arrachées lors de l'ouverture de l'emballage permettant ainsi de constater visuellement une ouverture de la boîte même si les parties d'ouvertures sont recollées. De tels témoins sont représentés sur la boîte 200 dans les figures 3 et 4. Ils sont formés par une série de cercles prédécoupés 241 et 242 respectivement disposés au niveau des rabats 212 et 221 par lesquels on ouvre la boîte. Dans le cas d'une boîte ou tout autre type d'emballage comportant de tels témoins, il peut être intéressant de disposer une partie du circuit d'antenne sur ces témoins de manière à accroître la détection de toute tentative d'ouverture de la boîte.

Les circuits d'antenne 133 ou 233 décrits ci-dessus peuvent être formés avec un fil conducteur plat très mince qui est collé sur la surface interne de la feuille de matériau avant assemblage ou bien au moyen d'une encre conductrice déposée par impression à la surface interne de la feuille de matériau. La formation de l'antenne par dépôt (impression) d'une encre conductrice permet de réaliser des formes variées d'une manière aisée facilitant notamment la formation d'ondulations ou de zigzags dans le circuit d'antenne.

Les formes de circuits d'antenne décrites précédemment ne sont que quelques exemples de configurations possibles d'un circuit d'antenne. L'homme du métier envisagera sans difficultés tout autre forme de circuit d'antenne adaptée à la forme ou aux dimensions de l'emballage ou à des besoins de sécurisation de l'emballage particuliers.

L'invention propose un emballage qui comprend des moyens électroniques qui permettent non seulement une identification et un suivi à distance mais aussi un contrôle rapide et sûr de l'intégrité de l'emballage. Ce contrôle ne demande pas de mettre en oeuvre des moyens autres que ceux habituellement utilisés, puisque le contrôle s'effectue lors de la lecture des informations mémorisées dans la puce électronique. En effet, si le lecteur ne peut lire les informations mémorisées, c'est que le circuit d'antenne a été rompu lors d'une ouverture frauduleuse de l'emballage.

Les moyens utilisés pour lire les informations à distance sont bien connus. Par exemple, la lecture des données mémorisées, telles qu'un code d'identification, peut être effectuée par exemple à l'aide d'un lecteur portable (non représenté) qui comprend principalement un écran d'affichage, un clavier de commande et des moyens pour activer la puce (transpondeur) par radiofréquence (RF). Ces moyens d'activation envoient une onde radiofréquence à la puce via l'antenne fixée dans l'emballage. L'onde reçue charge une capacité présente dans le circuit de la puce qui, lorsque la capacité se décharge, renvoie au lecteur un code ou une information, inscrite dans la mémoire de la puce.

Le code et/ou les informations de chaque puce interrogée sont ainsi envoyés vers le lecteur et affichés sur son écran et/ou stockés dans une mémoire, ou transférés, via une liaison série, vers un ordinateur de traitement pour le tri ou le suivi de l'emballage.

Alternativement, lorsque l'identification et le suivi doivent être réalisés à grande échelle de façon automatique, il est possible d'utiliser divers types de lecteurs non portables, tel qu'un lecteur type portique sous lequel les emballages défilent, qui présentent des géométries d'antennes permettant une lecture en série à une distance plus grande.

## Revendications

1. Emballage à intégrité contrôlable comprenant un composant électronique (130) interrogeable à distance formé d'un moyen de mémorisation de données (131) relié à un circuit d'antenne (133) et un corps fermé hermétiquement, ledit corps étant mis en forme par pliage d'une feuille de matériau (101) préalablement découpée suivant une forme prédéfinie, **caractérisé en ce que** ledit circuit d'antenne s'étend sur l'ensemble du pourtour de la surface interne de la feuille de matériau de façon à passer au moins une fois sur chacune des lignes de pliage (111a, 112a, 113a, 120a) formant les bords dudit corps.

2. Emballage selon la revendication 1, **caractérisé en ce que** le circuit d'antenne (133) s'étend en outre sur les faces internes principales (110, 120) de la feuille de matériau (101).

3. Emballage selon la revendication 1 ou 2, **caractérisé en ce que** le circuit d'antenne (133) disposé sur la feuille de matériau décrit une série d'ondulations ou de zigzags.

4. Emballage selon l'une des revendications 1 à 3, **caractérisé en ce que** le moyen de mémorisation de données (131) et le circuit d'antenne (133) du composant électronique sont disposés sur la surface interne de la feuille de matériau de manière à être protégé à l'intérieur de l'emballage une fois ce dernier assemblé.

5. Emballage selon l'une des revendications 1 à 3, **caractérisé en ce qu'**une première partie du circuit d'antenne (333) est disposée sur une face interne de la feuille de matériau, la seconde partie complémentaire du circuit d'antenne étant disposée sur l'autre face interne de la feuille à un emplacement déterminé de manière à compléter la première partie du circuit une fois l'emballage assemblé.

6. Emballage selon l'une des revendications 1 à 5, **caractérisé en ce que** le circuit d'antenne (133 ; 233 ; 333) est constitué d'un fil conducteur de très faible épaisseur collé sur la surface interne de la feuille de matériau.

7. Emballage selon l'une des revendications 1 à 5, **caractérisé en ce que** le circuit d'antenne (133 ; 233 ; 333) est constitué d'une encre conductrice déposée sur la surface interne de la feuille de matériau.

8. Emballage selon l'une des revendications 1 à 7, **caractérisé en ce que** le corps dudit emballage forme une enveloppe (100 ; 300).

9. Emballage selon l'une des revendications 1 à 7, **caractérisé en ce que** le corps dudit emballage forme une boîte (200).

10. Emballage selon l'une des revendications 1 à 9, **caractérisé en ce qu'**il comporte des portions de fragilisation (141, 142 ; 241 , 242 ; 341, 342) et **en ce qu'**au moins une partie du circuit d'antenne (133, 233, 333) traverse lesdites portions prédécoupées.

## Claims

1. Packaging that can be checked for tampering, which packaging comprises an electronic component (130) that can be interrogated remotely and that is formed by data storage means (131) connected to an antenna circuit (133) and a hermetically sealed body, said body being formed by folding a sheet of material (101) that has been cut to a predefined shape, the packaging being **characterised in that** said antenna circuit extends over the entire periphery of the inside surface of the sheet of material so as to pass at least once over the fold lines (111a, 112a, 113a, 120a) that form the edges of said body.

2. Packaging according to claim 1, **characterised in that** the antenna circuit (133) also extends over the main inside faces (110, 120) of the sheet of material (101).

3. Packaging according to claim 1 or claim 2, **characterised in that** the antenna circuit (133) disposed on the sheet of material describes a series of undulations or of zigzags.

4. Packaging according to one of claims 1 to 3" **characterised in that** the data storage means (131) and the antenna circuit (133) of the electronic component are disposed on the inside surface of the sheet of material so that it is protected inside the packaging once said packaging has been assembled.

5. Packaging according to one of claims 1 to 3, **characterised in that** a first portion of the antenna circuit (333) is disposed on one inside face of the sheet of material, the complementary second portion of the antenna circuit being disposed on the other inside face of the sheet at a place determined so that it completes the first portion of the circuit once the packaging has been assembled.

6. Packaging according to one of claims 1 to 5, **characterised in that** the antenna circuit (133; 233; 333) is constituted by a very thin conductor wire bonded by adhesive to the inside surface of the sheet of material.

7. Packaging according to one of claims 1 to 5, **characterised in that** the antenna circuit (133; 233; 333) is constituted by a conductive ink deposited on the inside surface of the sheet of material.

8. Packaging according to one of claims 1 to 7, **characterised in that** the body of said packaging forms an envelope (100; 300).

9. Packaging according to one of claims 1 to 7, **characterised in that** the body of said packaging forms a box (200).

10. Packaging according to one of claims 1 to 9, **characterised in that** the packaging is provided with weak portions (141, 142; 241, 242; 341, 342), and **in that** at least a portion of the antenna circuit (133; 233; 333) crosses said portions that are defined by precuts.

## Patentansprüche

1. Verpackung mit kontrollierbarer Unversehrtheit, umfassend ein fernabfragbares elektronisches Bauteil (130), das von einem mit einem Antennenkreis (133) verbundenen Mittel zur Datenspeicherung (131) gebildet ist, sowie einen dicht verschlossenen Körper, wobei der Körper durch Falten einer Materialfolie (101), die zuvor entsprechend einer vordefinierten Form zugeschnitten wurde, in Form gebracht wird, **dadurch gekennzeichnet, daß** sich der Antennenkreis über den gesamten Umfang der Innenfläche der Materialfolie derart erstreckt, daß er wenigstens einmal über eine jede der die Ränder des Körpers bildenden Faltlinien (111a, 112a, 113a, 120a) verläuft.

2. Verpackung nach Anspruch 1, **dadurch gekennzeichnet, daß** sich der Antennenkreis (133) ferner über die Hauptinnenseiten (110, 120) der Materialfolie (101) erstreckt.

3. Verpackung nach Anspruch 1 oder 2, **dadurch gekennzeichnet, daß** der auf der Materialfolie angeordnete Antennenkreis (133) eine Folge von Wellen oder Zickzacks beschreibt.

4. Verpackung nach einem der Ansprüche 1 bis 3, **dadurch gekennzeichnet, daß** das Mittel zur Datenspeicherung (131) und der Antennenkreis (133) des elektronischen Bauteils auf der Innenfläche der Materialfolie derart angeordnet sind, daß es bzw. er - sobald die Verpackung zusammengesetzt ist - innerhalb dieser geschützt ist.

5. Verpackung nach einem der Ansprüche 1 bis 3, **dadurch gekennzeichnet, daß** ein erster Teil des Antennenkreises (133) auf einer Innenseite der Materialfolie angeordnet ist, wobei der ergänzende zweite Teil des Antennenkreises auf der anderen Innenseite der Folie an einer bestimmten Stelle derart angeordnet ist, daß er - sobald die Verpackung zusammengesetzt ist - den ersten Teil des Kreises ergänzt.

6. Verpackung nach einem der Ansprüche 1 bis 5, **dadurch gekennzeichnet, daß** der Antennenkreis (133, 233; 333) von einem Leitungsdraht mit sehr geringer Dicke gebildet ist, der auf die Innenfläche der Materialfolie aufgeklebt ist.

7. Verpackung nach einem der Ansprüche 1 bis 5, **dadurch gekennzeichnet, daß** der Antennenkreis (133; 233; 333) von einer leitfähigen Tinte gebildet ist, die auf der Innenfläche der Materialfolie abgeschieden ist.

8. Verpackung nach einem der Ansprüche 1 bis 7, **dadurch gekennzeichnet, daß** der Körper der Verpackung ein Kuvert (100; 300) bildet.

9. Verpackung nach einem der Ansprüche 1 bis 7, **dadurch gekennzeichnet, daß** der Körper der Verpackung eine Schachtel (200) bildet.

10. Verpackung nach einem der Ansprüche 1 bis 9, **dadurch gekennzeichnet, daß** sie Versprödungsabschnitte (141, 142; 241, 242; 341, 342) umfaßt und daß wenigstens ein Teil des Antennenkreises (133, 233, 333) die genannten vorgeschnittenen Abschnitte durchquert.
